(19) Europäisches Patentamt
European Patent Office
Office européen des brevets

(11) Publication number: **0 379 851 A1**

(12) **EUROPEAN PATENT APPLICATION**

(21) Application number: **89870208.9**

(22) Date of filing: **21.12.89**

(51) Int. Cl.5: **A01N 25/02, A01N 25/04, A01N 43/40**

(30) Priority: **27.12.88 US 290134**
**21.11.89 US 437057**

(43) Date of publication of application:
**01.08.90 Bulletin 90/31**

(84) Designated Contracting States:
**GR**

(71) Applicant: **MONSANTO COMPANY**
**800 North Lindbergh Boulevard**
**St. Louis Missouri 63167(US)**

(72) Inventor: **Ebe, Conrad Walter**
**12564 Starspur**
**St. Louis Missouri 63146(US)**
Inventor: **Marshall, Lucia Garcia-Iniguez**
**5781 Summit Meadow Drive**
**St. Charles Missouri 63303(US)**
Inventor: **Lebeau, Lawrence Richard**
**Rural Route 4 Box 240**
**New Haven Missouri 63068(US)**
Inventor: **Warner, James Michael**
**874 Tuxedo Boulevard**
**Webster Groves Missouri 63119(US)**

(74) Representative: **Lunt, John Cooper et al**
**Monsanto Services International S.A. Patent Department Avenue de Tervuren 270/272**
**L.Box 21**
**B-1150 Brussels(BE)**

(54) **Dispensable pesticide-containing compositions.**

(57) A pesticide composition is provided that can be applied directly to plants by spraying.

The composition is an oil-in-water emulsion containing a nonpolar agriculturally acceptable pesticide in an agriculturally effective amount. The composition is especially useful when the nonpolar pesticide is pyridinedicarboxylic herbicide.

The composition contains a fatty oil, such as a long chain fatty acid, preferably methyl oleate or methyl laurate, in an amount sufficient to dissolve the pesticide(s). Water is used in the composition which will be the carrier for any polar pesticide. An amphipathic lipid is present in the compositions.

Use of an emulsifier and/or surfactant is optional.

EP 0 379 851 A1

# DISPENSIBLE PESTICIDE-CONTAINING COMPOSITIONS

## Background of the Invention

### A. Field of the Invention

This invention relates to a pesticide composition including herbicide, fungicide, insecticide and acaracide compositions. More particularly, this invention relates to a herbicidal composition suitable for being applied by rotary dispensation and even more particularly relates to an oil-in-water emulsion containing a pyridinedicarboxylic herbicide suitable for being applied to kill or control plants by rotary dispensation. Other methods of application include spraying or distributing using a garden hose attachment or other spray apparatus.

In employing a hose and applicator, the applicator is attached to the distribution end of a hose (or pipe) so that direction may be imparted to the composition exiting the hose. If desired, flexible or rigid hose or conveyor or distributor of liquid may be employed.

### B. Prior Art

Substituted pyridinecarboxylic acid and derivatives thereof are known to have a wide range of preemergence and postemergence activity as herbicides. Such herbicides are disclosed in U.S. Patent No. 4,609,399; U.S. Patent No. 4,618,679; U.S. Patent No. 4,655,816; U.S. Patent No. 4,692,184; and U.S. Patent No. 4,698,093 all of which are incorporated herein by reference.

In one embodiment of this invention, one may preferably apply aqueous spray solutions containing a herbicide by rotary dispensation. This is accomplished by feeding a composition of this invention to a device provided with a distribution element that discharges the composition of this invention in a controlled manner onto a defined area of plants or to any desired locus. British Patent Specification No. 2,131,327 discloses illustrative spray equipment useful for deposition of compositions of this invention.

Difficulties are encountered in obtaining a uniform spray when prior art spray mixtures are employed using a device designed to discharge a herbicidal mixture from a distribution element by rotary dispensation. The present invention provides a composition suitable for but not limited to being applied directly by rotary dispensation.

While pyridine herbicide compositions are known, they do not possess the characteristics to make stable, water dispersible emulsions with low animal toxicity and with maximum effectiveness in low pressure spraying lances in which the composition is distributed to plants or other desired targets from a rotary distribution element.

One of the problems with pyridine herbicides is their rather low solubility in water. Hydrophobic solvents such as oils have been used to dissolve pesticides and in some cases these oils have increased the absorption and translocation of the pesticide making the active ingredient more efficient. Besides increasing the solubility, the oil prevents the pesticides from crystallizing and when emulsions are made the oil allows good sprayability with droplet sizes of $<200$ microns while minimizing drift. However accompanying irritations make such oil compositions less desirable.

Some prior art oil/water emulsions for plant protection mixtures have used phospholipids and phospholipid/oil aqueous formulations, together with fatty acid ethoxylates, hydrogenated castor oils, nonylphenol, or fatty acid amides, or with aminoalcohols as coemulsifiers.

## Summary of the Invention

The present invention provides a composition which is suitable for being directly applied to plants or to ground and is especially suitable for rotary dispensation. The composition is an oil-in-water emulsion containing a nonpolar agriculturally acceptable pesticide in an agriculturally effective amount. The composition is especially useful when the nonpolar pesticide is pyridinedicarboxylic herbicide.

The composition contains a fatty oil, such as a long chain fatty acid, preferably methyl oleate or methyl laurate, in an amount sufficient to dissolve the pesticide(s). Water is used in the composition which will be the carrier for any polar pesticide. An amphipathic lipid is present in the compositions. As employed herein the term "amphipathic lipid" includes a phospholipid, a glycolipid, a sphingolipid or a ceramide. Illustrative preferred examples include those lipids having a hydrophillic "head" group and a hydrophobic "tail" group and have membrane forming capability. Illustrative lipids include those recited on pages 9-10 of CRC Handbook of Biochemistry and Molecular Biology, 3rd Edition, Gerald D. Fasman, 1975. Use of an emulsifier and/or surfactant is optional.

## Detailed Description of the Invention

Preferably, the pesticide is present in the composition in an amount of about 1 to about 30 weight percent based on the weight of the composition. More preferably, the pesticide is present in the composition in an amount of about 2-25 weight percent based on the weight of the composition.

Preferably, the long chain fatty oil solvent is present in the composition in amounts of about 0-80 weight percent based on the weight of the composition. More preferably, the fatty oil solvent is present in the composition in an amount of about 15-35 weight percent based on the weight of the composition.

Preferably, the amphipatic lipid is present in the composition in an amount of about 1-25 weight percent based on the weight of the emulsion. More preferably, the lipid is present in the composition in an amount of about 3-12 weight percent based on the weight of the composition.

Water is present in the composition in an amount of about 25-96 weight percent based on the weight of the composition. More preferably, water is present in the composition in an amount of about 50-80 weight percent based on the weight of the composition.

The amount of oil-in-water emulsifier and/or surfactant is sufficient to render the emulsion stable.

The emulsifier, such as a glycerol monostearate derivative, and/or surfactant, such as ammonium lauryl sulfate or sodium dodecyl benzene sulfate, is optionally present in the composition in an amount of about 0.5 to 20 weight percent based on the weight of the composition. More preferably, the emulsifier and/or surfactant is present in the composition in an amount of about 0.5-5 weight percent based on the weight of the composition.

Other adjuvants may be present in the composition. If desired for example, it is often preferred that a biocide be included in the composition to minimize the buildup of microorganisms. In order to prevent freezing of the composition, an antifreeze agent may be incorporated in the composition. The incorporation of an antifoam agent is often used to reduce air locks in some spray equipment.

The herbicidally active pyridinedicarboxylic acid is most preferably a 2,6-substituted-3,5-pyridinedicarboxylic acid compound. Preparation of such pyridinedicarboxylic herbicide is disclosed in U.S. Patent No. 4,692,184 which is incorporated herein in by reference. These pyridine compounds may be represented by the following structural formula

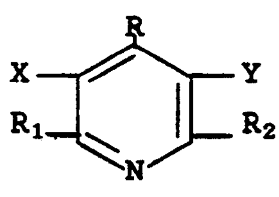

wherein

R is selected from the group consisting of lower alkyl, lower alkenyl, lower alkynyl, lower alkenylalkyl, haloalkyl, haloalkenyl, $C_{3\ 7}$ cycloalkyl, $C_{3\ 6}$ cycloalkanylalkyl, $C_{3\ 6}$ cycloalkenyl, aryl, arylmethyl, alkoxyalkyl, benzyloxymethyl, alkylthioalkyl, dialkoxyalkyl, (1-alkoxy-1-alkylthio)alkyl, aminoalkyl, alkylaminoalkyl, dialkylaminoalkyl, alkylsulfonylalkyl, alkylsulfinylalkyl, alkyl substituted with a dialkyl sulfonium salt, cyanoalkyl, carbamylalkyl, carbalkoxyalkyl, carbalkoxyalkenyl, formylalkyl, dialkylaminoalkenyl, saturated and unsaturated heterocyclic radicals having from 3 to 6 atoms in the ring including from 1 to 3 hetero atoms selected from O, S, and N, and wherein the radical is joined to the pyridine ring by a C-C bond, and lower alkyl substituted with a saturated or unsaturated heterocyclic radical wherein the heteroatom is selected from O, S, and N;

$R_1$ and $R_2$ are independently selected from alkyl, fluorinated methyl, and chlorofluorinated methyl radicals, provided that one of $R_1$ and $R_2$ must be a fluorinated methyl or chlorofluorinated methyl radical; and X and Y are independently selected from the group consisting of

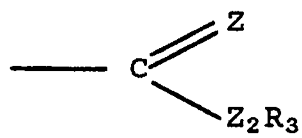

wherein
Z is selected from O and $NR_7$ where $R_7$ is hydrogen or lower alkyl, and wherein $Z_2$ is selected from O and S wherein $R_3$ in each occurrence is independently selected from hydrogen, alkyl $C_{1\ 4}$, alkenylalkyl $C_{3\ 4}$, haloalkyl $C_{1\ 4}$, cycloalkanylalkyl, cyanoalkyl, or alkynylalkyl $C_{3\ 4}$;

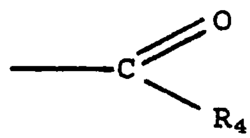

wherein
$R_4$ is selected from hydrogen and halogen,

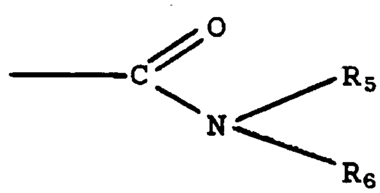

wherein
$R_5$ and $R_6$ are independently selected from hydrogen, lower alkyl, and phenyl;
$-CH_2OH$; and
$-C{\equiv}N$.

Compounds which are of particular interest as herbicides include those wherein X and Y are both ester groups in which $R_3$ in each ester group is independently an alkyl group having 1-3 carbon atoms. Of these preferred 3,5 diester compounds, a more preferred grouping includes those compounds in which $R_1$ and $R_2$ are dissimilar fluorinated methyl radicals; and within this more preferred grouping, the most preferred compounds are those in which R is an alkyl or alkylthioalkyl substituent having 1-5 carbon atoms.

The term "alkyl" means herein both straight and branched chain radicals which include, but are not limited to, ethyl, methyl, n-propyl, 1-ethylpropyl, 1-methylpropyl, n-butyl, 2,2-dimethylpropyl, pentyl, isobutyl, isopropyl and the like. The term "cycloalkyl" is intended to mean cycloalkyl radicals, such as cyclopropyl, cyclobutyl, cyclopentyl, cyclohexyl, and cycloheptyl.

The term "lower alkyl" herein means an alkyl radical having 1 to 7 carbon atoms. The terms "lower alkenyl" and "lower alkynyl" herein means alkenyl and alkynyl groups having 2 to 7 carbon atoms. Examples of such alkenyl groups include ethenyl, 1-propenyl, 2-propenyl, 1-butenyl, 2-butenyl, 3-butenyl, 2-methyl-1-propenyl, 2-methyl-2-propenyl, 1-methylethenyl, and the like. Examples of such lower alkynyl groups include ethynyl, 1-propynyl, 2-propynyl, and so forth.

The term "saturated and unsaturated heterocyclic radical" means heterocyclic radicals having from 3 to 6 atoms in the ring including from 1 to 3 hetero atoms selected form O, S and N, and typically include, but are not limited to, furyl, pyridyl, thienyl, thioranyl, oxiranyl, and aziridinyl.

The term "cycloalkanylalkyl" is intended to mean alkyl radicals substituted with a $C_{3_6}$ cycloalkyl radical. The term "haloalkyl" is intended to mean alkyl radicals substituted with one or more halogen atoms.

The term "fluorinated methyl" means herein methyl radicals having one or more fluorine atoms attached thereto including radicals wherein all hydrogen atoms are substituted by fluorine.

The term "chlorofluorinated methyl" means herein methyl radicals having at least one hydrogen substituted by fluorine and at least one other hydrogen substituted by chlorine.

Illustrative pesticides which may be employed herein include any pesticide either oil or water soluble. Illustrative pesticides include herbicides, fungicides and insecticides, mixtures thereof and the like. More than one pesticide may be employed if desired. An example of a preferred insecticide is chlorpyrifos. A preferred fungicide is pentachloronitrobenzene.

Among the fatty acid solvents recommended for the preparation of the compositions of the present invention are saturated or olefinically unsaturated fatty acids with 2-20 carbon atoms. Acids with 12-18 carbon atoms are preferred. More preferably are the alkyl esters of such acids. Particularly suitable are the lower alkyl esters, such as methyl esters of the fatty acids.

Included in the compositions of the present invention as adjuvants or auxiliary agents are natural or synthetic lipids. Particularly preferred are phospholipids or mixtures of purified phospholipids, such as phosphatidyl choline, phosphatidyl ethanolamine, N-acyl phosphatidyl ethanolamine, phosphatidyl serine and other phosphatides.

The composition of the present invention optionally contains an effective amount of a suitable surfactant and/or emulsifier. Preferred, surfactants include alkyl sulfate and alkylbenzenesulfonic acid, particularly lauryl sulfate and dodecylbenzenesulfonic acid. Typically, the surfactant contains a range of alkyl groups with the name designating the length of the alkyl group being derived from the average length of the alkyl group. As an example the lauryl and the dodecyl groups referred to herein have an average of about 12 carbon atoms. The length and branching of the alkyl chain can vary. Another suitable surfactant is ammonium lauryl sulfate with 3 ethoxide units.

When an emulsifier is used, it is preferred that the emulsifier be an alkoxylated partial ester of glycerol, e.g., glycerol monostearate condensed with about 3 to 30 or more moles of ethylene oxide, propylene oxide or mixtures thereof.

When preparing a composition of this invention which has both water and oil phases, it is preferred to prepare the oil phase separate from the water phase. In this process, the weights of the ingredients are calculated and measured before mixing.

The practice of the invention will be further illustrated by means of the following nonlimiting examples. Unless otherwise indicated all parts or percentages are given on a weight basis.

## EXAMPLES 1-15

The herbicide, S,S-dimethyl-2-(difluoromethyl)-4-(2-methylpropyl)-6-(trifluoromethyl)-3,5-pyridinedicarbothioate, was heated to 80°C to melt the same. A predetermined amount of methyl oleate was weighed and heated to 60°C. The herbicide and the methyl oleate were mixed together. Lipid, ethoxylated glycerol monostearate and a biocide (Proxel) was added to the resulting mixture and blended at high speed in a blender for 1-2 minutes until all materials were dispersed. In a separate blender, water, ammonium lauryl sulfate (3 EO) surfactant, silicone antifoam and propylene glycol (an antifreeze agent) were thoroughly mixed. Following this latter step, both the oil phase and the aqueous phase were blended together. A viscous white emulsion was formed. The resulting formulations illustrative of this invention are given in Table 1.

TABLE 1

| | Percent By Weight | | | | | | | | |
|---|---|---|---|---|---|---|---|---|---|
| Ex. No. | Herb | Oleate | PL | GMS | Proxel | $H_2O$ | Neodol | Sil | PG |
| 1 | 5.5 | 25 | 3.8 | 1.3 | 0.1 | 65 | 0.5 | 0.1 | 7.0 |
| 2 | 5.5 | 30 | 3.8 | 1.3 | 0.1 | 60 | 0.5 | 0.1 | 7.0 |
| 3 | 5.5 | 35 | 3.8 | 1.3 | 0.1 | 55 | 0.5 | 0.1 | 7.0 |
| 4 | 5.5 | 40 | 3.8 | 1.3 | 0.1 | 50 | 0.5 | 0.1 | 7.0 |
| 5 | 5.5 | 45 | 3.8 | 1.3 | 0.1 | 45 | 0.5 | 0.1 | 7.0 |
| 6 | 5.5 | 30 | 1.0 | 1.3 | 0.1 | 63 | 0.5 | 0.1 | 7.0 |
| 7 | 5.5 | 30 | 2.0 | 1.3 | 0.1 | 62 | 0.5 | 0.1 | 7.0 |
| 8 | 5.5 | 30 | 5.0 | 1.3 | 0.1 | 59 | 0.5 | 0.1 | 7.0 |
| 9 | 5.5 | 30 | 8.0 | 1.3 | 0.1 | 56 | 0.5 | 0.1 | 7.0 |
| 10 | 5.5 | 30 | 12.0 | 1.3 | 0.1 | 52 | 0.5 | 0.1 | 7.0 |
| 11 | 5.5 | 30 | 3.8 | 0.5 | 0.1 | 61 | 0.5 | 0.1 | 7.0 |
| 12 | 5.5 | 30 | 3.8 | 2.0 | 0.1 | 59 | 0.5 | 0.1 | 7.0 |
| 13 | 5.5 | 30 | 3.8 | 4.0 | 0.1 | 57 | 0.5 | 0.1 | 7.0 |
| 14 | 5.5 | 30 | 3.8 | 6.0 | 0.1 | 55 | 0.5 | 0.1 | 7.0 |
| 15 | 5.5 | 30 | 3.8 | 8.0 | 0.1 | 53 | 0.5 | 0.1 | 7.0 |

Herb = Herbicide
Oleate = Methyl oleate - carrier
PL = Phospholipid - thickener
GMS = Ethoxylated glycerol monostearate
Proxel - Biocide
Neodol = Ammonium lauryl sulfate (3 EO) surfactant
Sil = TH silicone antifoam-30
PG = Propylene glycol antifreeze

EXAMPLES 16-30

The procedure of Examples 1-15 was repeated except the methyl laurate was used instead of methyl oleate. The resulting compositions illustrative of this invention are given in Table 2.

TABLE 2

| | Percent by Weight | | | | | | | | |
|---|---|---|---|---|---|---|---|---|---|
| Ex. No. | Herb | Laurate | Lipid | GMS | Proxel | $H_2O$ | Neodol | Sil | PG |
| 16 | 5.5 | 25 | 3.8 | 1.3 | 0.1 | 58 | 0.5 | 0.1 | 7.0 |
| 17 | 5.5 | 30 | 3.8 | 1.3 | 0.1 | 53 | 0.5 | 0.1 | 7.0 |
| 18 | 5.5 | 35 | 3.8 | 1.3 | 0.1 | 48 | 0.5 | 0.1 | 7.0 |
| 19 | 5.5 | 40 | 3.8 | 1.3 | 0.1 | 43 | 0.5 | 0.1 | 7.0 |
| 20 | 5.5 | 45 | 3.8 | 1.3 | 0.1 | 38 | 0.5 | 0.1 | 7.0 |
| 21 | 5.5 | 25 | 1.0 | 1.3 | 0.1 | 56 | 0.5 | 0.1 | 7.0 |
| 22 | 5.5 | 25 | 2.0 | 1.3 | 0.1 | 55 | 0.5 | 0.1 | 7.0 |
| 23 | 5.5 | 25 | 5.0 | 1.3 | 0.1 | 52 | 0.5 | 0.1 | 7.0 |
| 24 | 5.5 | 25 | 8.0 | 1.3 | 0.1 | 49 | 0.5 | 0.1 | 7.0 |
| 25 | 5.5 | 25 | 12.0 | 1.3 | 0.1 | 45 | 0.5 | 0.1 | 7.0 |
| 26 | 5.5 | 25 | 3.8 | 0.5 | 0.1 | 54 | 0.5 | 0.1 | 7.0 |
| 27 | 5.5 | 25 | 3.8 | 2.0 | 0.1 | 52 | 0.5 | 0.1 | 7.0 |
| 28 | 5.5 | 25 | 3.8 | 4.0 | 0.1 | 50 | 0.5 | 0.1 | 7.0 |
| 29 | 5.5 | 25 | 3.8 | 6.0 | 0.1 | 48 | 0.5 | 0.1 | 7.0 |
| 30 | 5.5 | 25 | 3.8 | 8.0 | 0.1 | 46 | 0.5 | 0.1 | 7.0 |
| Laurate = methyl laurate - carrier | | | | | | | | | |

Samples of each of Compositions 1-30 were placed in a sealed jar and placed in a freezer maintained at -20° C and in an oven maintained at 50° C for one month. At the end of the month, the samples were visually analyzed for separation properties. The results are set forth in Table 3.

TABLE 3

| Example No. | Separation at -20° C | Separation at 50° C |
|---|---|---|
| 1 | No | No |
| 2 | No | No |
| 3 | -- | Yes |
| 4 | Yes | Yes |
| 5 | Yes | Yes |
| 6 | No | No |
| 7 | No | No |
| 8 | -- | No |
| 9 | Yes | -- |
| 10 | Yes | Yes |
| 11 | -- | No |
| 12 | No | -- |
| 13 | No | Yes |
| 14 | No | No |
| 15 | No | No |
| 16 | -- | No |
| 17 | Yes | No |
| 18 | Yes | No |
| 19 | Yes | No |
| 20 | Yes | No |
| 21 | No | No |
| 22 | No | No |
| 23 | -- | No |
| 24 | Yes | No |
| 25 | Yes | No |
| 26 | Yes | No |
| 27 | Yes | No |
| 28 | -- | No |
| 29 | -- | No |
| 30 | -- | No |
| Those compositions which show no separation at -20° C and 50° C are most preferred. "--" represent borderline separation situations. | | |

Samples of each of Examples 1-30 were placed in an MV1 measuring device for viscosity measurements in a Haake RV-20 viscometer. The measuring system that was used was M5 (Facot A = 3.22 and Factor M = 11.70). Each sample was allowed to equilibrate at 25° C for at least 5 minutes before each viscosity determination. The following parameters were programmed for each viscosity determination.

TABLE 4

| Segment No. | Shear Rate | Time | Temp |
|---|---|---|---|
| | (D = 1/sec) | Min. | °C |
| 1 | 1170 | 12 | 25 |
| 2 | 1170 | 12 | 25 |
| 3 | 1170 | 0 | 25 |

The measured viscosities are set forth in Table 5.

TABLE 5

| Example No. | Viscosity cPs |
|---|---|
| 1 | 11.3 |
| 2 | 12.9 |
| 3 | 18.1 |
| 4 | 22.7 |
| 5 | 17.3 |
| 6 | 7.7 |
| 7 | 10.3 |
| 8 | 18.4 |
| 9 | 28.7 |
| 10 | 36.3 |
| 11 | 12.6 |
| 12 | 14.0 |
| 13 | 20.3 |
| 14 | 36.5 |
| 15 | 61.5 |
| 16 | 12.0 |
| 17 | 16.6 |
| 18 | 20.7 |
| 19 | 28.4 |
| 20 | 45.7 |
| 21 | 9.4 |
| 22 | 20.4 |
| 23 | 30.9 |
| 24 | 45.1 |
| 25 | 117.5 |
| 26 | 25.5 |
| 27 | 20.1 |
| 28 | 38.0 |
| 29 | 72.0 |
| 30 | 93.3 |

Flow rates of each composition were measured using a NOMIX Trim and Edge illustrated in Monsanto booklet No. 154-88-LOIR equipped with a rotary dispensator dispenser. Approximately 800 grams of each emulsion was placed inside a plastic bag. Each bag was sealed and connected to the device. During spraying the bag was positioned 1.02 meters above the exit of the composition from the dispenser. The dispenser was primed by allowing the emulsion to flow out of its dispensing head (without a disk on the head) for at least 30 seconds. Once the head was primed, flow rate measurements were made by releasing the emulsion from the device for 30 seconds. At the end of the time period, the amount of released emulsion was measured; and the emulsion flow rate was expressed in terms of grams per minute. Flow rates for each formulation were measured at five different dispensing settings. In Table 6 the determined flow rates in grams per minute are set forth.

TABLE 6

| Ex. No. | Setting 25 | Setting 20 | Setting 15 | Setting 10 | Setting 5 |
|---|---|---|---|---|---|
| 1 | 135 | 133 | Ran out | --- | --- |
| 2 | 115 | 61 | 97 | 86 | 60 |
| 3 | 187 | 140 | 114 | 47 | 54 |
| 4 | 112 | 107 | 105 | 71 | 63 |
| 5 | Invert | | | | |
| 6 | 250 | 161 | 181 | 181 | Ran out |
| 7 | 205 | 146 | 159 | 91 | 68 |
| 8 | 149 | 136 | 87 | 87 | 46 |
| 9 | 68 | 64 | 54 | 43 | 51 |
| 10 | 34 | 28 | 23 | 22 | 16 |
| 11 | 167 | 198 | 166 | 124 | 97 |
| 12 | 203 | 150 | 135 | 129 | 103 |
| 13 | 118 | 113 | 86 | 68 | 70 |
| 14 | 66 | 76 | 55 | 49 | 34 |
| 15 | 39 | 40 | 33 | 24 | 23 |
| 16 | 211 | 173 | 155 | 129 | 85 |
| 17 | 173 | 158 | 127 | 103 | 86 |
| 18 | 146 | 127 | 109 | 85 | 78 |
| 19 | 118 | 93 | 76 | 64 | 56 |
| 20 | 52 | 49 | 40 | 36 | 31 |
| 21 | 290 | 250 | 218 | 98 | Ran out |
| 22 | 143 | 127 | 118 | 103 | 91 |
| 23 | 85 | 70 | 62 | 57 | 46 |
| 24 | 61 | 55 | 45 | 37 | 34 |
| 25 | 20 | 8 | 4 | 3 | 3 |
| 26 | 125 | 129 | 109 | 95 | 74 |
| 27 | 163 | 123 | 123 | 102 | 85 |
| 28 | 48 | 53 | 56 | 40 | 35 |
| 29 | 15 | 16 | 14 | 12 | 11 |
| 30 | 8 | 12 | 10 | 8 | 7 |

The above data show that the compositions of the present invention can be used to dispense centrifugally a pesticide in a carefully controlled manner.

## Procedure for Post Emergent Treatment

### A. Planting

Kentucky 31 tall fescue is grown from untreated certified seed in square green plastic pots 10 cm and 7 cm wide at the top and bottom, respectively, and 9 cm high. The soil mix is composed of one third silt loam, two thirds Redi-earth soil conditioner by volume and 2.4 kilograms per cubic meter IBDU 31-0-0 slow release fertilizer. After thorough mixing, the soil medium is heat sterilized. Pots are filled with soil mix to the top of the pot and pressed lightly to 1 cm below the top. Adequate seed is broadcast evenly and covered with approximately 0.4 cm of the soil mix.

Common bermudagrass is grown from untreated certified seed. Planting procedure for common bermudagrass is identical to tall fescue.

Sweet clover is grown from seed in the same size pots as the grasses. The soil mix is Metro Mix 350. Pots are filled with soil mix, leveled at the top of the pots, and compressed lightly to 1 cm below the top. Adequate seed is broadcast evenly and covered with approximately 0.4 cm of soil mix.

Common dandelion is grown from untreated seed. Planting procedure for common dandelion is identical to that of sweet clover.

Immediately after planting all pots are watered to field capacity. Pots are watered everyday thereafter during germination. Seedlings emerge in approximately 5 to 8 days after planting.

B. Plant Culture

The greenhouse for tall fescus is maintained at a day/night temperature of approximately 14/18° C. The greenhouse for common bermudagrass, sweet clover and common dandelion is maintained at a day/night temperature of approximately 29/24° C. Photoperiod for all plant species during fall, winter and spring is 12 hours. During summer, the natural photoperiod is used. Approximately 3 weeks after planting, plants are mowed to a uniform height of 6 cm. Tall fescue and bermudagrass are mowed 3 times per week. Sweet clover and common dandelion are mowed once each week. Plant material is mowed with a modified electric mower-vacuum device that removes clippings. The mower is mounted on top of the greenhouse bench and moves along the length of the bench.

Optimum soil moisture levels are maintained by hand irrigation with tap water. Water used for irrigation is maintained as close as possible to room air temperature. Large oscillating fans are used to ventilate the greenhouses to insure that the plant shoots dry soon after irrigation thus reducing disease potential.

Fungicides and insecticides are applied on an as needed basis. Fungicides are chosen based on time of year that specific diseases are expected to be a problem. Fungicides and insecticides are applied according to manufacturer's label recommendations.

Plants utilized for treatment are 8 weeks old. This age plant responds well to chemical application yet exhibits sufficient physiological and morphological maturity for good translation of greenhouse to field test.

A. Soil/pan preparation: The fifty percent Ray silt loam/fifty percent Redi-earth soil mixture (v/v) used in this test has an OM content of 2.4 percent, does not crust, and holds its shape when pressed into the pans. The soil moisture contains no fertilizer and the entire soil mixture is steam sterilized. A batch of soil is prepared and pans are filled on an as needed basis. The day before chemical treatment, pans are planted with seeds or vegetative propagules of the appropriate species, covered, and packed with the previously described soil mixture to within 6.4 mm of the top of the pan.

A. Aluminum pans (outside dimensions = 29.5 cm X 15.6 cm X 7.62 cm deep) with each pan having ten holes (0.952 cm diameter) drilled in the bottom. Ten rows are stamped in the soil which is filled from the top of the pan.

B. An adequate supply of viable seeds and vegetative propagules of the desired plant species: lespedeza (Lespedeza stipulacea), common chickweed (Stellaria media), Dutch clover (Trifolium repens), large crabgrass (Digitaria sanguinalis), annual bluegrass (Poa annua), yellow foxtail (Setaria lutescens), yellow nutsedge (Cyperus esculentus), dallisgrass (Paspalum dilatatum), common purslane (Portulaca oleracea), and barnyardgrass (Echinochloa crusgalli). Species may vary due to availability and viability of seeds or vegetative propagules.

C. Chemical Application

Chemistry is applied using a Nomix lance which has been adapted for use in a sprayer. The chemical flow rate is regulated via a peristaltic pump. The switch width is adjusted for a 61 cm spray width and the speed for chemical delivery can be adjusted from 0.8 to 4.83 kilometers per hour.

The appropriate rate of application may be delivered by adjusting the flow rate of the chemical via the peristalic pump and/or adjusting the speed of delivery.

| | Formulations | | | |
|---|---|---|---|---|
| Ingredients | (A) | (B) | (C) | Type |
| | wt% | wt% | wt% | |
| Active* | 5.5 | 4.5 | 4.6 | Active |
| Methyl oleate | 30.0 | 74.0 | 74.0 | Carrier |
| Lecithin | 3.8 | 21.0 | 21.0 | Thickener |
| Proxel GXL | 0.1 | 0.1 | 0.1 | Biocide |
| Surfactant | --- | 0.5 | --- | Surfactant |
| GMS SE AS | 1.3 | --- | --- | Op/Emuls. |
| Water | 59.0 | --- | --- | Carrier |
| Neodol 25-3A | 0.5 | --- | --- | Surfactant |
| TH Silicone Antifoamer | 0.1 | --- | --- | Antifoam |

*S,S-dimethyl 2-(difluoromethyl)-4-(2-methylpropyl)-6-(trifluoromethyl)-3,5-pyridinedicarbothiate,

D. Evaluations

After treatment the plant materials are placed in the greenhouse in a random design. Evaluations are taken 14 and 28 days after treatment. For the postemergence grass species a quantatative height measurement is taken at both readings. Plant phytotoxic measurements are recorded on a scale of 0-100, with 0 = no effect and 100 = total effect, on all plant species. All abnormal effects are recorded.

Percent emergence is recorded for the preemergence species, on a scale of 0-100, with 0 = complete emergence and 100 = no emergence, is used. Plant phytotoxic measurements are also recorded in preemergence tests.

All treatments are compared to untreated controls.

| RESULTS | | | |
|---|---|---|---|
| Treatment | Rate kg/hr | Percent Control of Large Crabgrass | |
| | | PE(18DAT) | POE(41DAT) |
| Formulation: | | | |
| (A) | 0.14 | 95 | 93 |
| | 0.28 | 99 | 80 |
| | 0.56 | 100 | 93 |
| | 0.84 | 100 | 97 |
| (B)* | 0.14 | 95 | 97 |
| | 0.28 | 100 | 90 |
| | 0.56 | 95 | 92 |
| | 0.84 | 99 | 99 |
| (C)* | 0.14 | 95 | 94 |
| | 0.28 | 93 | 75 |
| | 0.56 | 98 | 80 |
| | 0.84 | 75 | 95 |

* Formulations (B) and (C) are oil based formulations.

It is to be understood that the detailed description of the present invention including the above examples are given merely by way of illustration and that many modifications may be made therein without

departing from the spirit or scope of the present invention.

## Claims

1. An agriculturally acceptable pesticide composition comprising
(a) an effective amount of an agriculturally acceptable nonpolar pesticide, and
(b) a fatty oil in an amount sufficient to dissolve said pesticide;

2. An agriculturally acceptable pesticide emulsion composition comprising
(a) an effective amount of an agriculturally acceptable nonpolar pesticide;
(b) a fatty oil in an amount sufficient to dissolve a nonpolar pesticide;
(c) an amphipathic lipid in an amount sufficient to thicken and disperse the emulsion; and
(d) water.

3. An agriculturally acceptable pesticide emulsion composition comprising
(a) an effective amount of an agriculturally acceptable polar pesticide;
(b) a fatty oil in an amount sufficient to make an emulsion;
(c) an amphipathic lipid in an amount sufficient to thicken and disperse said emulsion; and
(d) water in an amount sufficent to dissolve said polar pesticide.

4. An agriculturally acceptable pesticide emulsion composition comprising
(a) an effective amount of a nonpolar pesticide and a polar pesticide;
(b) a fatty oil in an amount sufficient to dissolve said nonpolar pesticide;
(c) an amphipathic lipid in an amount sufficient to thicken and disperse the emulsion; and
(d) water in an amount sufficient to dissolve a polar pesticide.

5. The composition of Claims 2, 3 and 4 wherein said composition additionally comprises a polar or non-polar pesticide or a mixture thereof.

6. The composition of Claim 5, wherein said amphipathic lipid includes molecules having hydrophilic "head" groups and hydrophobic "tail" groups with membrane-forming capability.

7. The compositions of Claims 1, 2, 3, 4, 5 and 6 wherein an additional emulsifier and or surfactant is present.

8. The composition according to Claim 7, wherein a biocide is additionally present to prevent bacterial growth therein.

9. A composition according to Claim 7, wherein an antifoam agent is present.

10. A composition according to Claim 8, wherein an antifreeze is present.

11. A composition according to Claim 9, wherein the pesticide is a herbicide.

12. A herbicidal composition suitable for being applied directly to plants comprising an oil-in-water emulsion of
(a) a pyridinedicarboxylic herbicide in amount of about 1-30% by weight based on the weight of the emulsion;
(b) fatty oil in an amount of about 10-45% by weight based on the weight of the emulsion;
(c) an amphipathic lipid in an amount of about 1-25% by weight based on the weight of the emulsion;
(d) water in an amount of about 25-96% by weight based on the weight of the emulsion; and
(e) an emulsifier in an amount of about 0.5-20% by weight based on the weight of the emulsion.

13. The composition of Claims 1, 2, 3, 4 and 12 wherein said pyridinecarboxylic acid is a 2,6-substituted-3,5-pyridinedicarboxylic acid compound.

14. The composition of Claim 13 wherein said compound is S,S-dimethyl-2-(difluoromethyl)-4-isobutyl-6-trifluoromethyl-3,5-pyridinedicarbothioate.

15. The composition of Claim 13 wherein said fatty oil is a fatty acid derivative having 2-20 carbon atoms.

16. The composition of Claim 15 wherein the fatty oil is a fatty acid derivative having 12-18 carbon atoms.

17. The composition of Claim 16 wherein the amphipathic lipid is a natural phospholipid.

18. The composition of Claim 7 wherein said emulsifier is an alkoxylated glycerol partial ester.

19. The composition of Claim 7 wherein the emulsifier is ethoxylated glycerol monostearate.

20. The composition of Claims 1, 2, 3, 4 and 5 wherein said fatty oil is a long chain fatty acid in the form of its methyl ester.

21. A method of applying the composition of Claims 1, 2, 3, 4 and 5 to a desired locus by rotary dispensing said compositions of Claims 1-5.

22. A method of applying the composition of Claims 1, 2, 3, 4 and 5 to kill or control plants by rotary

dispensing said compositions of Claims 1-5.

23. A method of killing or controlling plants by applying the composition of Claims 1, 2, 3, 4 and 5 to plants by rotary dispensing said composition to said plants.

24. A method of killing or controlling plants by applying the composition of Claim 12 to plants by rotary dispensing said composition to said plants.

25. A process for the preparation of said composition of Claim 1 which comprises admixing said pesticide and said fatty oil.

26. A process for the preparation of said composition of Claim 2 which comprises admixing said nonpolar pesticide, said fatty oil, said amphipathic lipid and water.

27. A process for the preparation of said composition of Claim 3, which comprises admixing said polar pesticide, said fatty oil, said amphipathic lipid and said water.

28. A process for the preparation of said composition of Claim 4, which comprises admixing said polar pesticide, said nonpolar pesticide, said fatty oil, said amphipathic lipid and said water.

29. A process for the preparation of the compositions of Claims 2, 3, 4 and 5 wherein an oil phase is prepared first and thereafter blended with a water phase which are thereafter admixed to form said composition.

European Patent Office

# EUROPEAN SEARCH REPORT

Application Number

EP 89 87 0208

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 554 110 (N.V. PHILIPS' GLOEILAMPENFABRIEKEN)<br>* Page 1, left-hand column, lines 3-7; page 3, left-hand column, lines 24-31; abstract * | 1,21-23,25 | A 01 N 25/02<br>A 01 N 25/04<br>A 01 N 43/40 |
| X | US-A-1 938 864 (B. REWALD)<br>* Page 1, example 1, lines 82-87,92-96 * | 2,4-6,26,28-29 | |
| X | EP-A-0 099 039 (A. NATTERMANN & CIE GmbH)<br>* Page 8, line 29 - page 9, line 17; page 10, lines 14-15,25-30; page 11, lines 1-6; claims 1,3,7-8,10 * | 2,7,18-19,21-23,26 | |
| A | EP-A-0 068 295 (A. NATTERMANN & CIE GmbH)<br>* Page 3, line 21; page 17, lines 22-27; claims 1,4,7 * | 2-29 | |
| D,A | EP-A-0 133 612 (MONSANTO CO.)<br>* Page 132, example 141; page 206, lines 9-35; claims 19-35 * | 12-17,24 | TECHNICAL FIELDS SEARCHED (Int. Cl.5)<br>A 01 N |

The present search report has been drawn up for all claims

| Place of search | Date of completion of the search | Examiner |
|---|---|---|
| THE HAGUE | 25-04-1990 | RAVANEL C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)